(19) Europäisches Patentamt
European Patent Office
Office européen des brevets

(11) **EP 4 050 518 A1**

(12) **EUROPEAN PATENT APPLICATION**

(43) Date of publication:
**31.08.2022  Bulletin 2022/35**

(21) Application number: **21159225.8**

(22) Date of filing: **25.02.2021**

(51) International Patent Classification (IPC):
**G06N 3/04** *(2006.01)*          **G06N 3/08** *(2006.01)*
**G06N 20/10** *(2019.01)*

(52) Cooperative Patent Classification (CPC):
**G06N 3/0445; G06N 3/0454; G06N 3/088;
G06N 20/10**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Krompaß, Denis
81549 München (DE)**
• **Köpken, Hans-Georg
91056 Erlangen (DE)**
• **Yang, Yinchong
85579 Neubiberg (DE)**

(54) **GENERATION OF REALISTIC DATA FOR TRAINING OF ARTIFICIAL NEURAL NETWORKS**

(57)    The invention relates to a method and an apparatus for generating realistic data RD for training of an artificial neural network. The generation of suitable and accurate artificial neural networks for monitoring of industrial processes requires the availability of an enormous amount of realistic training data. It proposed to generate such realistic data RD by augmenting simulation data SD of such a process with samples which are drawn from a model of residual data wherein the residual data represent a difference between real data collected from a real process and simulated data generated in a simulation of that real process.

# FIG 1

**Description**

The invention relates to a method and an apparatus for generating realistic data for training of an artificial neural network.

Modern deep learning methods have proven to be powerful universal approximators, which can learn to solve a large variety of tasks, including image classification, object detection, natural language translation etc. Moreover, deep learning models are also trained to detect anomalies in signal data, for example captured in manufacturing processes for quality control purposes. The quality of a trained deep neural network, however, heavily relies on the amount of heterogeneous and labeled training data. It is commonly believed that if the complexity of a model exceeds the amount of training samples, the model may overfit and perform poorly on new samples.

For example in industry, labeled data that could be used to train anomaly detection models are usually very scarce. Labelled data with relevance for the industry domain are expensive and it takes domain knowledge to label such data for training. First, to collect anomalous data, e.g. from such manufacturing processes, it might involve destroying manufactured workpieces in order to collect anomalous observation, which could be costly and sometimes impossible. Second, even if anomalous data are available, it takes specific domain knowledge and experience to correctly label and classify the anomalies, so that a (deep) machine learning model may first learn to replicate the human decisions, and then perform prediction on new, unseen samples.

Alternatively, the anomaly detection model could be trained with data collected from simulation processes. However, it is hardly possible that a simulation considers all aspects of the simulated process. That is to say, certain discrepancies between simulated and real data are expected, which is known as the reality gap. From a statistical point of view, the simulated and real data do not originate from the same distribution and to this end, an anomaly detection model that is trained only on simulated data is not expected to perform well on real data.

Due to the shortage of labeled anomalous data in industry, one has to, among others, focus on relatively smaller and simpler anomaly classification models. These models often contain a limited number of free parameters and are thus less prone to overfitting. However, they may not be able to capture high-order feature interactions in the data.

However, the shortage of labeled data in industry is not only applicable for anomaly detection but also for general classification or regression tasks.

Therefore, an approach is required which provides industrial domain training data on a large scale for training artificial neural networks. This is solved by the method suggested in claim 1 and by the apparatus suggested in claim 13. Dependent claims describe further advantageous embodiments.

Thus, a computer implemented sample preparation method is proposed for generating a new sample S* of data for augmenting simulation data SD to generate realistic data RD=SD⊕S* to be applied for training of a data evaluation model DEM. Therein, the symbol "⊕" stands for a suitable mathematical operation to augment SD with S*, e.g. an addition. The new sample S* is based on an output data set ODS sampled and drawn, respectively, from a model MOD. The model MOD is a model of an input data set IDS and of its distribution, respectively. The input data set IDS is based on residual data Z, wherein the residual data Z are based on real data XR of a real process and simulated data XS of a simulated process corresponding to the real process, i.e. the simulated process is a simulation of the real process. The input data set IDS can be the residual data Z themselves, i.e. IDS=Z, or it can be further processed residual data Z, IDS=funct(Z) with "funct" being any suitable function for processing Z. Thus, the model MOD is a model of the residual data Z themselves or of a representation of the residual data Z. Ultimately and in any case, the model MOD represents the residual data Z.

For a generation of the model MOD, a Short-Time Fourier Transformation (STFT) can be applied on the residual data Z to largely reduce the number of variables before the model MOD of the residual data Z is generated, such that the generation of the model MOD is based on the STFT transformed residual data Z as input data set IDS, i.e. IDS=STFT(Z).

Consequently, for the generation of the new sample S*, a corresponding inverse Short-Time Fourier Transformation (STFT$^{-1}$) would be applied on the output data set ODS sampled from the model MOD of the residual data Z to generate the new sample S*. It should be emphasized that the application of the inverse STFT does not necessarily have to be performed on the output data set ODS directly. The formulation "is applied on the output data set" includes that an intermittent process step, e.g. an inverse Principal Component Analysis, can be optionally applied on such sampled data set before the inverse STFT is performed.

The advantage of STFT is the fact that one takes into account the nature of the data. Industrial signal data are often long time series that can be modeled using Fourier transformation. A second advantage of STFT is its invertibility. That is to say, the generated data in frequency domain can be transformed back to time domain.

Additionally, for the generation of the model MOD, a Principal Component Analysis (PCA) can be applied on the STFT transformed residual data Z, i.e. on the output of the STFT residual data Z, before the model MOD of the residual data Z is generated, such that the generation of the model MOD of the residual data Z is based on the STFT and subsequently PCA transformed residual data Z as input data set IDS, i.e. IDS=PCA(STFT(Z)).

Consequently, for the generation of the new sample S*, a corresponding inverse Principal Component Analysis (PCA$^{-1}$) is applied on the output data set ODS of the model MOD before the inverse Short-Time Fourier Transformation (STFT$^{-1}$) is applied, such that the inverse Short-Time Fourier Transformation (STFT$^{-1}$) is applied on the output of the inverse Principal Component Analysis (PCA$^{-1}$). Thus, S*=STFT$^{-1}$(PCA$^{-1}$(ODS)).

The PCA is advantageous in that it is a data-driven approach to extract the most important information from the frequencies in a principled manner. One also does not have to make any assumption such as only the low or high frequencies are important. The PCA is also invertible, so that the KDE only needs to learn the distribution of the principal components of the STFT of the raw data

In a first embodiment of the method and the model MOD, respectively, the model MOD is generated based on a multivariate Gaussian method MVG. Thus, i.e. in the first embodiment the input data set IDS is modeled based on a multivariate Gaussian distribution $N_G$. The first embodiment assumes a Gaussian distribution of the input data set IDS which can be verified, for example, by statistical tests or by observing a distribution plot of the input data set IDS.

Therein, a covariance matrix $CM \in \mathbb{R}^{T \times T}$ is calculated for the residual data Z with entries $CM_{ij}=Cov(Z_i,Z_j)$ with coefficients i and j, each ranging from 1 to T with T representing the number of elements of the residual data Z. For example, such number can be the number T of time steps in case the real data XR, simulated data XS, and -therewith- residual data Z are time series as in the examples described below. For the sampling of the output data set ODS from the so generated MVG based model MOD(MVG), a random sample RANDS is drawn from the corresponding modeled multivariate Gaussian distribution with $N_G(0,CM)$, such that ODS=RANDS.

For the generation of the model MOD, a pre-processing step PRE, especially a downsampling method, is performed on the real data XR and on the simulated data XS before calculation of the residual data Z based on the real data XR and the simulated data XS to reduce their lengths and amounts of data, respectively, resulting in DOWN(XR) and DOWN(XS). For example, one could apply downsampling methods, average or max pooling methods to generate XR' from XR and XS' from XS. Correspondingly, the amount of residual data Z is reduced as well due to the reduction of XR and XS such that the input data set IDS corresponds to DOWN(Z). Later on, a corresponding data upsampling step UP is performed on the random sample RANDS drawn from the multivariate Gaussian distribution to generate the new sample S*, such that S*=UP (RANDS) .

In a second embodiment of the method and the model MOD, respectively, the model MOD applies a Kernel Density Estimation method KDE, wherein for the generation of the model MOD, a distribution $U_r$ of the input data set IDS is determined based on the Kernel Density Estimation method KDE. In other words, in the second embodiment the residual data Z or its representation, the input data set IDS, respectively, are modeled based on a Kernel Density Estimation approach, i.e. this embodiment is based on a Kernel Density Estimation (KDE) to fit the residual data Z and its distribution, respectively.

For the generation of the output data set ODS, a row vector w* is uniformly sampled from the so generated KDE based model MOD(KDE) .

In a third embodiment of the method and the model MOD, respectively, the model MOD is based on a Variational Auto-Encoder VAE, wherein for the generation of the model MOD, the Variational Auto-Encoder VAE comprising an encoder ANN1 and a decoder ANN2 is trained based on the input data set IDS to learn a distribution of the input data set IDS such that the output data set ODS can be generated by the trained Variational Auto-Encoder VAE based on a randomly selected data set, preferably sampled from a zero-mean standard-variance multivariate Gaussian distribution, provided to the Variational Auto-Encoder VAE.

Both the encoder ANN1 and the decoder ANN2 are embodied as artificial neural networks. I.e. in the third embodiment the residual data Z and its representation, the input data set IDS, respectively, are modeled based on a Variational Auto-Encoder approach. In comparison with the multivariate Gaussian solution, VAE does not make any distributional assumption on the data. In comparison with the Kernel Density Estimation, the VAE method does not depend on a definition of a kernel function and does not require the data to be in a Euclidean space. The VAE is a flexible generative model that can approximate any empirical distribution. This advantage becomes even more apparent as the number of training samples grows. After training, only the decoder part ANN2 needs to be available for generation of the output data set ODS, i.e. the VAE approach does not require much storage.

Generally, it can be assumed that the training of a Variational Auto-Encoder is known. Such known training can be applied with VAE wherein the input data set IDS and especially a plurality of different input data sets IDS is used as training data.

For example, the training of the Variational Auto-Encoder VAE might include that the input data set IDS is provided to the encoder ANN1, the encoder ANN1 provides an intermediate distribution $N_i$ based on the input data set IDS by producing parameters of a given distribution type, wherein the given distribution type is preferably a multivariate Gaussian distribution and the parameters are the mean and the variance of such Gaussian distribution. An intermediate sample is sampled and drawn, respectively, from the so generated intermediate distribution, the intermediate sample is provided to the decoder ANN2, and the decoder ANN2 reconstructs a reconstructed data set from the provided intermediate sample such that the difference between the input data set IDS and the reconstructed data set is minimized and such that the sampling distribution $N_i$ becomes similar to a zero-mean standard-deviation multivariate Gaussian, preferably in terms of Kullback-Leibler-Divergence.

In other words, the training of the Variational Auto-Encoder might include that the encoder ANN1 is trained such that it learns a mapping from the input data set IDS to a hidden space, wherein the input data set IDS is preferably supposed to follow a given distribution type which is, preferably, a multivariate Gaussian distribution. The decoder ANN2 is trained to reconstruct the input data set IDS from a sample encoded by the encoder ANN1 based on the input data set IDS, therewith learning the inverse function of the decoder, such that the trained decoder is adapted to map any new input data set NIDS, preferably from the target zero-mean standard-variance multivariate Gaussian distribution, to an original input space of the input data set IDS.

Thus, as soon as the training is completed only the decoder is required for generating the output data set ODS.

For the generation of the output data set ODS in the third embodiment, the randomly selected data set, preferably sampled from a zero-mean standard-variance multivariate Gaussian distribution, is provided to the trained decoder ANN2 and the trained decoder ANN2 performs a transformation of the provided distribution to generate the output data set ODS.

In a fourth embodiment of the method and the model MOD, respectively, the model MOD is based on a Generative Adversarial Network GAN, wherein for the generation of the model MOD, the Generative Adversarial Network GAN comprising a discriminator DISC and a generator GEN is trained, i.e. its trainable parameters are adapted, based on the input data set IDS to learn a distribution of the input data set IDS such that the output data set ODS can be generated by the trained Generative Adversarial Network GAN based on a randomly selected data set provided to the Generative Adversarial Network GAN. For example, the randomly selected data set can have a multivariate Gaussian distribution. I.e. in the fourth embodiment the residual data Z and its representation, the input data set IDS, respectively, are modeled based on Generative Adversarial Networks.

Both the generator GEN and the discriminator DISC can be embodied as artificial neural networks.

The GAN model is a neural network based generative model. It enjoys the advantage of being very flexible in approximating theoretically any data distribution. This advantage becomes even more apparent as the number of training samples grows. After training, only the generator part GEN needs to be available for generation of the output data set ODS, i.e. the GAN approach does not require much storage.

Generally, it can be assumed that the training of a Generative Adversarial Network is known. Such known training can be applied with GAN wherein the input data set IDS and especially a plurality of different input data sets IDS is used as training data.

For the generation of the output data set ODS in the fourth embodiment, the randomly selected data set is provided to the trained generator GEN and the trained generator GEN generates the output data set ODS based on the provided randomly selected data set.

A computer system for generating a new sample S* of data for augmenting simulation data SD to generate realistic data RD=SD⊕S* to be applied for training of a data evaluation model DEM, comprises a sample preparation module configured to perform a method described above to generate the new sample S*.

The computer system furthermore comprises an augmentation module wherein the sample preparation module is connected to the augmentation module to provide the new sample S* to the augmentation module and wherein the augmentation module is configured to augment simulated data SD with the new sample S* to generate the realistic data RD.

Moreover, a data evaluation module for anomaly detection in an industrial process is configured to receive data from the industrial process, e.g. from corresponding sensors located at suitable positions, and to detect anomalies in the received data which anomalies represent an anomaly in the industrial process, wherein the data evaluation module applies an artificial neural network DEM which is trained based on the realistic data RD generated by the computer system and the method explained above.

In short, the training approach for which the realistic data RD are generated comprises three main steps: First, simulation data SD in a simulated environment are generated. Second, the simulated data SD are augmented with realistic noise patterns S* that are hard to simulate. Third, the data evaluation model DEM is trained based on the augmented data RD=SD⊕S*.

To generate training data TD for training of the data evaluation model DEM which is based on an artificial neural network ANN, simulation data SD are provided to the augmenter and the augmenter generates a new sample S* as well as realistic data RD based on the provided simulation data SD and the generated new sample S*. The realistic data RD represents such training data TD.

As a summary, the solution provides an approach to enable training of powerful and complex data evaluation models DEM, e.g. for anomaly detection in a data scarce context, e.g. a manufacturing process, but also for other scenarios. The solution is based on a general framework to extract and process discrepancy signals, i.e. residuals $Z_t$,

between real data XR(t) and corresponding simulated data XS(t) and to learn a distribution of those data $Z_t$. Based on this, new samples S* can be generated which are then used to augment simulation data SD to produce realistic data RD, e.g. via RD=SD+S*, which is expected to bridge the reality gap and improve the downstream data evaluation model DEM. Such realistic data RD are qualified to be applied as training data for the data evaluation model DEM. Thus, more powerful data evaluation models DEM that are data-hungrier and/or which prevent current model from overfitting become affordable. The training of the model DEM itself based on the generated realistic data is not an object of this invention and will, therefore, not be addressed in detail.

The most obvious advantage lies in the fact that a principally unlimited amount of realistic data RD to train complex data evaluation model DEM in a data scarce context can be generated. Otherwise, only relatively simple detection models can be trained with the few expensive real data.

The proposed method extracts the unknown residual by subtracting the simulation signals from the real ones. This facilitates the augmenter to focus on learning only the distribution of the residuals instead of the complete signal. Consequently, the augmenter is configured to generate infinite new samples from the learned residual distribution, by mapping random seeds from a known distribution to samples from the unknown distribution. That is to say, as long as new simulation data SD are collected that do not leave the distribution of simulated samples that the augmenter has been trained on, the augmenter is expected to transform the simulation data SD into real-like, i.e. realistic, data RD, that can be used to train the downstream data evaluation models, e.g. an anomaly detection model. Furthermore, such augmented data samples do not have to be labeled by domain experts because it can be assumed that the augmented residuals do not change the simulated labels, but add variation to the simulated data in a principled manner, which prevents the anomaly detection model from overfitting while preserving the true distribution of the real data.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

In the following, possible embodiments of the different aspects of the present invention are described in more detail with reference to the enclosed figures. The objects as well as further advantages of the present embodiments will become more apparent and readily appreciated from the following description of the preferred embodiments, taken in conjunction with the accompanying figure in which:

FIG 1 shows an architecture for generating realistic data RD,
FIG 2 shows application scenarios of different embodiments of the invention,
FIG 3 shows the proposed method in a first embodiment,
FIG 4 shows an optional variation of the first embodiment,
FIG 5 shows the first embodiment in a different visualization,
FIG 6 shows the proposed method in a second embodiment,
FIG 7 shows the proposed method in a third embodiment,
FIG 8 shows the inner architecture of a Variational Auto-Encoder,
FIG 9 shows the proposed method in a fourth embodiment,
FIG 10 shows a training mode of a Generative Adversarial Network,
FIG 11 shows a generation mode of a Generative Adversarial Network.

### DETAILED DESCRIPTION

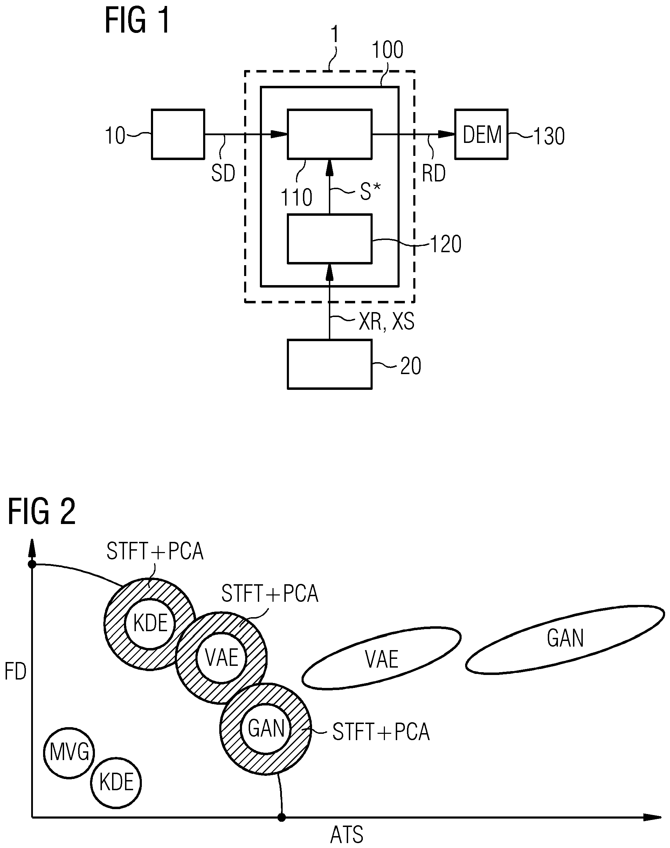

FIG 1 shows the overall architecture of a computer system 1 and a method for generating realistic data RD for training of a data evaluation model DEM, which can be, for example, configured for anomaly detection in an industrial process. The data evaluation model DEM is based on an artificial neural network which has to be trained with a suitable amount of high quality data. Such data shall be represented by the realistic data RD provided by the approach introduced herewith.

The architecture comprises an augmenter 100 for generating the realistic data RD. The augmenter 100 comprises an augmentation module 110 and a sample preparation module 120.

The sample preparation module 120 is configured to generate a new sample S* as described in detail below and to provide it to the augmentation module 110.

The augmentation module 110 receives the new sample S* as well as simulation data SD from a first data provider 10 and is configured to augment the simulation data SD with the new sample S* to generate the realistic data RD, e.g. by adding the simulation data SD and the new sample S*, such that RD=SD+S*. Other combinations of SD and S* might also be reasonable. Therefore and more general, the operation of augmenting the simulation data SD with the new sample S* to generate realistic data RD shall be symbolized with the symbol "⊕", i.e. RD=SD⊕S*. The simulation data SD might be, for example, data representing the industrial process for which the exemplary anomaly detection shall be performed. In case anomaly detection is intended, the simulation data SD could correspond to simulations of defective processes. The first data provider 10 is a corresponding data source or computer system which is configured to provide such data.

Thus, the augmenter 100 fulfills two purposes: Firstly, it generates the new sample S* with the sample preparation module 120. Secondly, it generates realistic data RD with the augmentation module 110 based on the simulation data SD and on the new sample S*.

For the generation of the new sample S*, the sample preparation module 120 receives as an input real data XR and corresponding simulated data XS from a second data provider 20. For example, both the real data XR and the simulated data XS can be time dependent signals XR(t), XS(t), each with T time steps with T>1, typically T»1 and with $XR \in \mathbb{R}^{N \times T}$ as well as $XS \in \mathbb{R}^{N \times T}$. The real data XR can be data measured in a real, physical environment, e.g. a work piece manufacturing environment, during executing a dedicated process, e.g. a manufacturing process of the work piece. The process executed in the real environment is simulated or, in other words, the process is executed in a simulation environment corresponding to the real environment, in any case resulting in the simulated data XS such that the simulated data XS correspond to the real data XR, but the data XS and XR will typically not be identical.

On a high level, the sample preparation module 120 is configured to extract a discrepancy signal Z or residual data Z, respectively, between simulated data XS and real data XR and to learn a distribution of those. From this kind of residual model new samples can be drawn to generate S* which can then be used to augment the simulation data SD to bridge the reality gap and to improve the downstream data evaluation model.

In the following, different embodiments of the sample preparation module 120 which processes real and simulated data XR and XS to generate the new sample S* will be introduced to address the challenge to build an augmenter 100 that can generate realistic data RD that typically cannot be modeled in a simulation environment or even be explained by domain experts. The different embodiments apply different approaches in the sample preparation module 120 to build and train such an augmenter 100, including a "Multivariate Gaussian" model (MVG), a "Kernel Density Estimation" model (KDE), a "Variational Auto-Encoder" model (VAE), and a "Generative Adversarial Nets" model (GAN). Additionally, a data-efficient pre-processing pipeline is designed especially for the VAE model and the GAN model, combining "Short-Time Fourier Transform" (STFT) and "Principal Components Analysis" (PCA) to scale those two data hungry models to a data scarce situation.

As an exemplary overview, FIG 2 proposes application scenarios of the approaches and embodiments, respectively, depending on the amount of training samples ATS and the feature dimensionality FD. The MVG and KDE methods are by nature data-efficient in that they can learn an empirical distribution from relatively few observed data points. However, KDE has weaknesses in scaling to larger dimensionality of the feature space. VAE and GAN, on the other hand, contain larger number of free parameters and thus require a large amount of training samples. In fact, they can further improve their modeling performance with further increasing of the amount of samples. In industry, often only a small amount of high dimensional data is available. To this end, a pre-processing pipeline involving STFT and PCA can shift the application domain of VAE and GAN to a more data-scarce scenario and scale KDE to higher dimensional data.

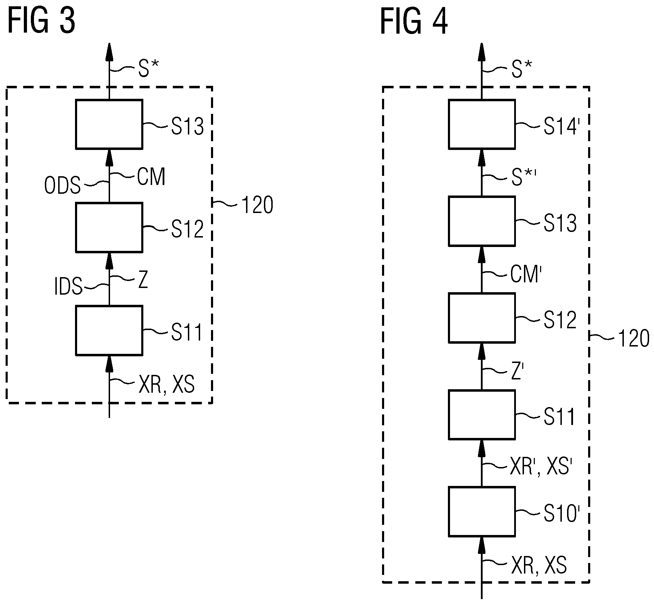

FIGs 3-11 show details of the different embodiments. Despite their different approaches, the embodiments have in common, that they process the same input, namely the simulated data XS and the real data XR, to calculate residual data Z, and that they generate a new sample S* based on such residual data Z. However, their approaches of processing the residual data Z to generate the new sample S* are different from each other. In each case, a model MOD of the residual data Z is created and based on the model MOD the new sample S* is generated. An input data set IDS is provided to the model MOD for generating the model MOD. After training, the model MOD is ready to generate an output data set ODS which already corresponds to the new sample S* or which has to undergo further processing to result in the new sample S*.

However, in a first step S11 of determining the residual data Z executed by the sample preparation module 120 the discrepancy between the real data XR and the simulated data XS is calculated, preferably by calculating the difference Z=XR-XS. Since the simulated and real data XS, XR can be time dependent data XS(t), XR(t), the residual data Z would also be time dependent data $Z_t$. Consequently, like XR(t) and XS(t) the residual data $Z_t$ would also contain T time steps. However, in the following the possible time dependencies "(t)" of XS(t), XR(t), and $Z_t$ might be omitted for the sake of brevity.

FIG 3 shows a flow chart of a method applied by the sample preparation module 120 in a first embodiment to generate a new sample S* for further processing in the augmentation module 110 as described above. In a first step S11, real data XR and simulated data XS provided by the second data provider 20 are processed to calculate the residual data Z. The first embodiment assumes a Gaussian distribution of the residuals Z which can be verified, for example, by statistical tests or by observing a distribution plot of the residual data Z. In the first embodiment the residual data Z are modeled using a multivariate Gaussian distribution. For this and due to the assumed multivariate Gaussian distribution, a covariance matrix $CM \in \mathbb{R}^{T \times T}$ can be calculated in a second step S12 with entries $CM_{ij}=Cov(Z_i,Z_j)$ with coefficients i and j each ranging from 1 to T with T still representing the number of time steps. That is to say, one treats each time step T of the residual data Z as a variable that correlates with all other time step variables and explicitly models the correlation with the (i,j)-th element $CM_{ij}$ in the covariance matrix CM of size (T,T). In a third step S13, the new sample S* is generated by drawing a random sample from the corresponding multivariate Gaussian distribution with $S^*=N_G(0,CM)$. Thus, the residual data Z act as the input data set IDS and the new sample S* itself is the output data set ODS.

The most obvious advantage of the first embodiment lies in the fact that the correlation or interaction between features, i.e. time steps, is modeled explicitly.

As mentioned above, it is assumed that a Gaussian distribution $N_G$ is applicable. However, the residual data Z should at least show symmetry to a certain extent. In such a case, a multivariate Gaussian distribution might not agree with observation in term of the kurtosis.

The first embodiment solves a complex problem of generating real-like data, using the simple and transparent method based on multivariate Gaussian distributions $N_G$. However, the method may not scale to extremely long time series with very large T, since the size of the covariance matrix CM will increase quadratically with the number of variables. Therefore, an optional variation of the first embodiment which is shown in FIG 4 applies a pre-processing step S10' on the raw time series XR, XS to reduce their lengths and amounts of data, respectively. For example, one could apply average or max pooling methods to generate XR' from XR and XS' from XS. While the steps S11, S12, S13 work as described above, but only with less data T'<T, the preliminary new sample S*' generated in step S13' would have to undergo a corresponding post-processing step S14', e.g. an upsampling or interpolation method, to generate S*. As an alternative, the upsampling might be applied with the simulation data SD and the realistic data RD instead of upsampling the new sample S*.

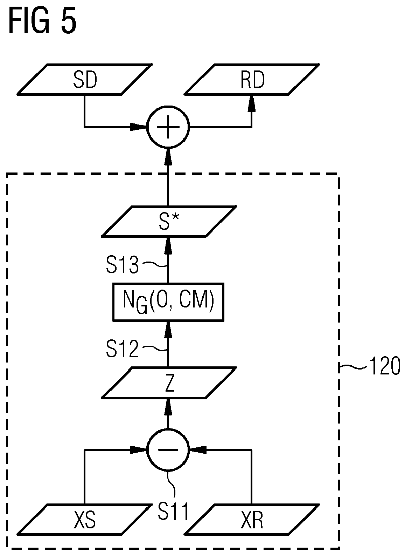

FIG 5 still refers to the first embodiment and shows the first embodiment's approach of FIG 3 in a different visualization.

In the first embodiment, it has been utilized that in case a multivariate Gaussian distribution can be assumed for the residual data Z, i.e. for the difference between real XR and simulated data XS, such Gaussian distribution serves as the augmenter in that the new sample S* is sampled therefrom to be added to the simulation data SD to generate the realistic data RD. However, in case the residual data Z are not Gaussian distributed the first embodiment might reach its limits.

At least in case it is inappropriate to model the residual data Z with a Gaussian distribution and, in more general words, in case the data do not follow known distributions like Gaussian, the second to fourth embodiment described below can be applied.

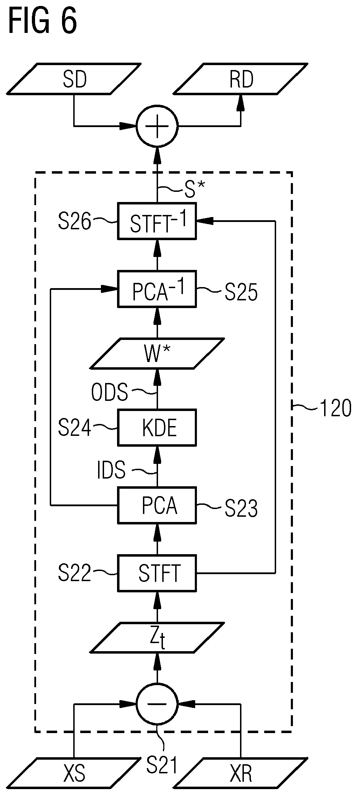

FIG 6 shows a flow chart of a method applied by the sample preparation module 120 in a second embodiment to generate a new sample S* for further processing in the augmentation module 110 as described above. The second embodiment, being a very data efficient and flexible solution to model the residual data Z, is based on a Kernel Density Estimation (KDE) to fit the residual data Z and its distribution, respectively, and to generate a model MOD of the residual data Z. The advantage of the KDE approach is that one does not have to make any assumption about the residual distribution. The method only requires that the distance between residual samples is valid in an Euclidean space. However, as explained in more detail below, a large amount of data is expected. Therefore, but generally as an option, the second embodiment applies a Short-Time Fourier Transformation (STFT) to largely reduce the number of variables. As a beneficial option, a Principal Component Analysis (PCA) can be applied, which further reduces the dimensionality while retaining as much information as possible.

In concrete and still referring to FIG 6, in a first step S21 of the second embodiment real data XR and simulated data XS provided by the second data provider 20 are processed to calculate the residual data Z, e.g. Z=XR-XS. With XR and XS being time series XR(t), XS(t) in the example addressed herein, the residual data Z would also be a time series $Z_t$.

In a second step S22, the STFT method is performed on the residual data $Z_t$ to generate $Z_f$. In general, the STFT algorithm first divides a time series, here $Z_t$, into a number of smaller, typically overlapping windows and subsequently performs Fourier transformation on each window. For example, the overlap might amount to 50%. The outcome of the STFT method is thus an array of signals in the frequency domain. Here, it is easy to see that one could model the complete time series $Z_t$ using very few dominating frequencies f. Thus, in the second step S22 the STFT of $Z_t$ is first calculated with $Z_f=STFT(Z_t)$ with $Z_f \in \mathbb{C}^{N \times L \times M}$ where M is the total number of windows and L is the number of frequencies f. Since the STFT method also produces imaginary numbers, it is proposed to extract their real parts and concatenate these with the real numbers. Therefore, subsequently a reformulation of $Z_f$ is performed to generate

$g(Z_f) \in \mathbb{R}^{Nx(2 \cdot L \cdot M)}$ by extracting the real values from the imaginary part, thus doubling the dimension L to be 2L. Thus, the function "g" first extracts the real and imaginary parts of the complex matrix generated by STFT, yielding two matrices of real values. It then vectorizes both matrices and concatenate them, returning a single vector of shape 2*L*M.

In a third step S23 of the second embodiment the PCA method is applied on the output $g(Z_f)$ of the second step S22. It is not necessarily true that the available signals consist of only low frequencies. Therefore, instead of keeping only the leading frequencies, it is proposed to apply Principal Component Analysis PCA to further reduce the dimensionality while retaining as much information as possible. Thus, in step S23 the PCA method is applied on $g(Z_f)^T g(Z_f)=VLV^T$ and a transformation $U_r:=g(Z_f)V_r$ is performed, where r is a hyper parameter that defines the number of principal components. Finally, the output of the third step S23, i.e. after applying STFT and PCA on $Z_t$, would be $U_r$ which contains the principal components. This corresponds to the input data set IDS in the second embodiment.

Regarding steps S22 and S23, the combination of STFT and PCA aims at reducing the dimensionality and extracting representations to an extent that their distances can be well captured using an RBF kernel in the KDE method. The STFT first splits the complete signal $Z_t$ into smaller windows with, for example, 50% overlap and transforms the temporal signal in each window into frequency domain. However, not every time window is necessarily relevant, nor is every frequency. Therefore, the PCA method serves as a feature selector that keeps only the most relevant ones. PCA is fitted by maximizing the variance in each orthogonal dimension and is thus purely data driven. Hand engineering for deciding which frequency feature shall be kept is not necessary. Thus, it is proposed to perform Short-time Fourier Transform STFT and Principal Components Analysis PCA to extract relevant latent features and reduce the dimensionality of the raw residual data $Z_t$. The same is applicable in the third and fourth embodiments which will be described below and which also can apply the combination of STFT and PCA as in the second embodiment.

In a fourth step S24 of the second embodiment the KDE method mentioned above is applied. The KDE method is a non-parametric model that can approximate any distribution, by following a simple concept: The probability density at any position within a domain $x \in X$ depends on the number of observations in the neighborhood NB(x) of x as well as the distance d(x,x*) between x and each observation for all x* in that neighborhood NB(x). The more observations and the smaller the distance d (thus larger similarity), the higher probability should be prescribed to x. Therefore, the KDE method only requires a valid definition of the distance and the kernel metric, respectively, to quantify the similarity between samples. The KDE method is based on a kernel function K which measures a distance d between observed samples. For example, the kernel function K can be realized as a "radial basis function" kernel (RBF kernel). A probability density function based on a kernel function K can be approximated as follows:

$$\hat{f}(x) = \frac{1}{N}\sum_{i=1}^{N} K_h(x - x_i) \ \text{with} \ K_h(d) = \frac{1}{\sqrt{2\pi}}e^{-\frac{d^2}{h}} \ \text{with} \ d = x - x_i$$

A new sample x* can be easily drawn from the distribution via $x^* \sim N_G(x_i,h)$ with $i \sim U_r(0,N)$ with h being a scaling parameter that reflects the belief in the variance of x.

The choice of the kernel function K is crucial and the RBF kernel is one suitable solution. The example addressed herein has long time series with T time steps where each time step is to be treated as a variable. If one would directly apply an RBF kernel in this space, one would suffer from the curse of dimensionality, i.e. the distance measurements would degrade to random guesses in a high dimensional space. Even with a pooling method for reducing the amounts of data as mentioned in the context of the first embodiment still hundreds of variables would have to be considered. Therefore, as already mentioned, the second embodiment first applies a different approach including the Short-Time Fourier Transformation (STFT) to largely reduce the number of variables, taking into account the temporal nature of the signal data $Z_t$.

Thus, in the fourth step S24 of the second embodiment a KDE on $U_r \in \mathbb{R}^{Nxr}$ with scale parameter q is defined. Subsequently, a row vector u* is uniformly sampled from $U_r$ and a new vector w* is sampled from a multivariate Gaussian distribution with $w^* \sim N_G(u^*, q \cdot I)$ with I representing the identity matrix. In this example of a multivariate Gaussian with mean being a random sample from the principal components and diagonal covariance of q=h, h being the scale parameter that was used to define the kernel mentioned above, it can be seen as drawing zero-mean, q-variance Gaussian noises and adding it to the principal components, before transforming the data back to time domain.

With this w*, being the output data set ODS, the underlying data for the new sample S* to be applied for augmenting the simulation data SD is available. However, the STFT and PCA transformations of the second and third step S22, S23 have to be inversed before SD can be augmented.

Therefore, in a fifth step S25 of the second embodiment an inverse PCA transformation based on parameters applied in the third step S23 is performed on $W \star V \in \mathbb{R}^{N x (2 \cdot L \cdot M)}$ and in a sixth step S26 an inverse STFT transformation based on parameters applied in the second step S22 is performed to generate $S^*=STFT^{-1}(f^{-1}(w^*V))$. The usage of corresponding parameters in forward and backward transformations STFT, STFT$^{-1}$ and PCA, PCA$^{-1}$, respectively, are indicated in FIG 6 by arrows between the corresponding process steps.

To summarize the key technical features of the second embodiment, first STFT and PCA methods are applied to reduce the dimensionality of the residual data $Z_t$. A KDE method is used to fit a non-parametric distribution of only a couple of principal components, without making any distribution assumptions. In order to generate the new sample S*, a sample w* is drawn from the KDE model and inverted PCA and inverted STFT are performed to transform the random principal components back to the time domain. In other words, due to the residual data $Z_t$ not necessarily being Gaussian distributed, the second embodiment proposes a non-parametric method, the Kernel Density Estimation, to model an arbitrary empirical distribution of the residual data $Z_t$. In addition, it is proposed to perform Short-time Fourier Transform (STFT) and Principal Components Analysis (PCA) to extract relevant latent features and reduce the dimensionality of the raw data.

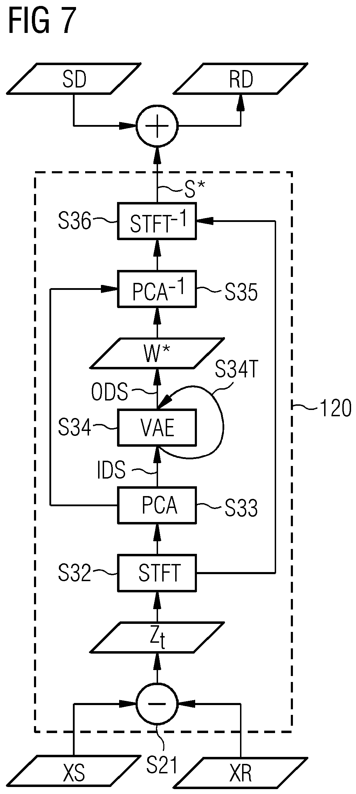

FIG 7 shows a flow chart of a method applied by the sample preparation module 120 in a third embodiment to generate a new sample S* for further processing in the augmentation module 110 as described above. The third embodiment, being a flexible and data driven solution to model the residual data Z, is based on a Variational Auto-Encoder (VAE) to generate a model MOD of the residual data $Z_t$.

The first S31, second S32, and third step S33 of the third embodiment correspond to first S21, second S22, and third step S23 of the second embodiment. I.e. the third embodiment also uses the STFT method in step S32 based on residual data $Z_t$ generated in step S31 and the PCA method in step S33, each described above in detail. The same is applicable for the step S36 which is an application of an inverse STFT, corresponding to step S26 of the second embodiment, and for step S35 which is an application of an inverse PCA, corresponding to step S25 of the second embodiment. Therefore, steps S31, S32, S33, S35, S36 will not be described again for the sake of brevity. Essentially, the difference between the second and the third embodiment lies in the central generative module being a Variational Auto-Encoder in the third embodiment instead of Kernel Density Estimation in the second embodiment, each processing in steps S24, S34 the respective outputs $U_r$ of the PCA steps S23, S33 to generate w*. The remaining parts of the procedures, i.e. S21, S22, S23, S25, S26 and S31, S32, S33, S35, S36 are principally identical.

Thus, the third embodiment also uses the explained STFT and PCA pre- and post-processing pipelines, but applies an even more data-driven solution than the second embodiment to learn the distribution of pre-processed residual data $Z_t$, namely the "Variational Auto-Encoder" (VAE) approach. In comparison with the multivariate Gaussian method used in the first embodiment, the VAE method does not make any distributional assumption on the data. In comparison with the Kernel Density Estimation method, VAE does not depend on a manual definition of the kernel function and does not require the data to be in a Euclidean space. The VAE method is a very flexible generative model that can approximate any empirical distribution. This advantage becomes even more apparent as the number of training samples grows. The KDE method, being an instance-based approach, requires to store all samples in order to generate new samples, while the VAE method only requires to store the decoder part once the VAE is trained. That is to say, as soon as the number of training samples exceeds the number of necessary trainable parameters, it is always advantageous to apply the VAE method instead of the KDE method. Furthermore, due to the neural network architecture, the VAE method can in fact profit from increasing training samples.

In more detail, the output $U_r$ of step S33, corresponding to the output $U_r$ of step S23 of the second embodiment which is essentially the STFT and PCA transformed residual data $Z_t$, is further processed in the fourth step S34 of the third embodiment as the input data set IDS. In the fourth step S34, a VAE is defined and trained on $U_r \in \mathbb{R}^{N x r}$ until convergence is achieved.

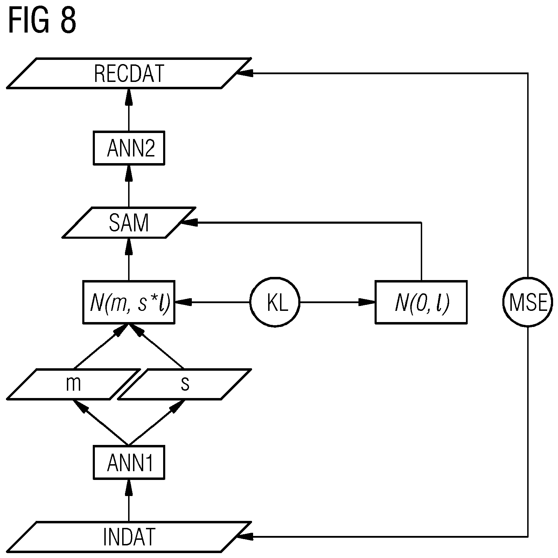

This is explained in more detail with FIG 8 which shows the inner VAE architecture. The VAE consists of two artificial neural networks ANN1, ANN2 with ANN1 representing an encoder and ANN2 representing a decoder. For example, both ANN1 and ANN2 can be based on single-layered fully-connected architecture with a tanh activation function. The encoder ANN1 consumes input data INDAT and produces two vectors m, s of lower dimensionality than the input data INDAT. The first vector m represents the mean and the second vector s represents the diagonal variance of a multivariate Gaussian distribution $N_G$ of the latent representations of the input. Samples SAM are drawn from this distribution and the drawn samples SAM are fed into the decoder network ANN2. The decoder network ANN2 attempts to reconstruct the input data INDAT from these samples SAM and generates reconstructed data RECDAT.

Such an architecture is trained such that two criterions are achieved: Firstly, the difference between input data INDAT and reconstructed data RECDAT is minimized, for example in terms of mean-squared-error (MSE). This criterium is closely related to the training of a simple auto-encoder: It encourages the encoder to extract the most relevant information from the data and to represent these in a lower dimensional space. The decoder serves an inverse function of the decoder by reconstructing the original data. Secondly, the sampling distribution $N_G(m,sl)$ shall become similar to a zero-mean standard-deviation multivariate Gaussian, for example in terms of Kullback-Leibler (KL) divergence. This second criterium enforces the learned representations to follow a simple multivariate Gaussian distribution, so that after training, random samples can be drawn from the $N_G(0,I)$ distribution and the decoder is able to produce the corresponding data point in the original feature space.

Thus, the encoder part ANN1 of VAE learns a mapping from input data INDAT into a hidden space where the input data INDAT are supposed to follow a multivariate Gaussian distribution. This is realized by minimizing the KL-divergence between the empirical distribution of mapped samples, and the target Gaussian. At the same time, the decoder network ANN2 is trained to reconstruct the input samples from the encoded samples, learning exactly the inverse function of the decoder. After training, the decoder is already adapted to map any new sample from the target zero-mean standard-variance multivariate Gaussian distribution to the original input space. It is very efficient to draw samples from such a simple Gaussian and have the decoder perform the transformation.

Coming back to the fourth step S34 of the method shown in FIG 7 for generating the new sample S* from residual data $Z_t$ based on the VAE approach, VAE is trained on $U_r \in \mathbb{R}^{N \times r}$ until convergence is achieved. That includes that a mean-squared-error MSE optimization is conducted corresponding to the approach explained under FIG 8 until convergence is reached, wherein MSE $(U_r,$ decoder $(z)) + KL(N_G(m, s \bullet I), N_G(0,1))$ with $z \sim N_G(m, s \bullet I)$ and $[m,s] = encoder(U_r)$ is minimized to reach such convergence.

When convergence is achieved, a new vector w* is sampled as the output data set ODS from the multivariate Gaussian distribution with $w^* \sim N_G(0,I)$, i.e. the standard Gaussian of zero-mean and unit variance. With this w*, the underlying data for the new sample S* to be applied for augmenting the simulation data SD is available.

As mentioned above, the fifth step S35 principally corresponds to S25 in being an inverse PCA transformation and the sixth step S36 principally corresponds to S26 in being an inverse STFT transformation. In the step S35, an inverse PCA based on PCA parameters of step S33 is performed on decoder (w) $(w) * V \in \mathbb{R}^{N \times (2 \bullet L \bullet M)}$. The decoder in the context of VAE is a transformation of a random sample from a standard Gaussian into the distribution of the training data, which are of shape $(2 \bullet L \bullet M)$ in this context. In the sixth step S36, an inverse STFT transformation $STFT^{-1}$ based on parameters applied in the second step S32 is performed to finally generate $S^* = STFT^{-1}(f^{-1}(w^*V))$. The usage of corresponding parameters in forward and backward transformations STFT, $STFT^{-1}$ and PCA, $PCA^{-1}$, respectively, are indicated in FIG 7 by arrows between the corresponding process steps

To conclude the third embodiment, it is proposed to first perform the STFT and PCA preprocessing steps and then train a VAE to learn the distribution of the few principal components. After the training, which symbolized by loop S34T in FIG 7, samples can be drawn from a zero-mean standard-variance multivariate Gaussian distribution and these samples can be fed to the decoder part of the VAE, which attempts to recover the corresponding representation in the principal components space.

The VAE applied in the third embodiment is a very flexible generative model that can approximate any empirical distribution. This advantage becomes even more apparent as the number of training samples grows.

In contrast to KDE and MVG, which only contains a couple of hyper-parameters, VAE contains relatively larger numbers of trainable parameters. Without enough training samples, the VAE might be prone to overfitting. In order to remedy this, it is proposed to apply the STFT and PCA preprocessing. By reducing the input dimension the number of trainable parameters in VAE is also reduced, therewith preventing it from overfitting.

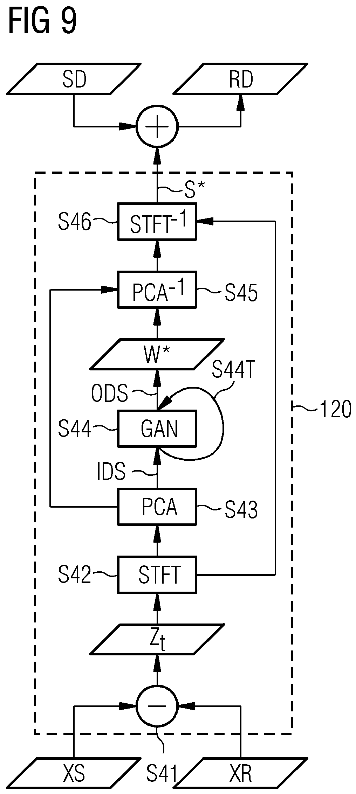

FIG 9 shows a flow chart of a method applied by the sample preparation module 120 in a fourth embodiment to generate a new sample S* for further processing in the augmentation module 110 as described above. The fourth embodiment, being a flexible and data driven solution to model the residual data $Z_t$, is based on Generative Adversarial Networks (GAN) to generate a model MOD of the residual data $Z_t$.

The first S41, second S42, and third step S43 of the fourth embodiment correspond to first S21, second S22, and third step S23 of the second embodiment. I.e. the fourth embodiment also uses the STFT method in step S42 based on residual data $Z_t$ generated in step S41 and the PCA method in step S43, each described above in detail. The same is applicable for the step S46 which is an application of an inverse STFT, corresponding to step S26 of the second embodiment, and for step S45 which is an application of an inverse PCA, corresponding to step S25 of the second embodiment. Therefore, steps S41, S42, S43, S45, S46 will not be described again for the sake of brevity. Essentially, the difference between the second and the fourth embodiment lies in the central generative module being a Generative Adversarial Network GAN in the fourth embodiment instead of Kernel Density Estimation as in the second embodiment, each processing in steps S24, S44 the respective outputs $U_r$ of the PCA steps S23, S43 to generate w*. The remaining parts of the procedures, i.e. S21, S22, S23, S25, S26 and S41, S42, S43, S45, S46 are principally identical.

Thus and in short, the fourth embodiment also uses the explained STFT and PCA pre- and post-processing pipelines and first performs a Short-Time Fourier Transformation (STFT) on the residual data $Z_t$. The STFT algorithm divides a time series into smaller windows with overlap and then performs a Fourier transformation on each window.

The outcome of STFT of each sample is thus an array of signals in the frequency domain. It is proposed to concatenate all such signals to form a 1D feature vector for each sample. The PCA method is then applied to reduce the dimension and the extracted principal components serve as input data set IDS to the next step in the procedure which is its fourth step S44.

In more detail, the output $U_r$ of step S43, corresponding to the output $U_r$ of step S23 of the second embodiment and to the output of step S33 of the third embodiment and being the output data set ODS, which is in each case essentially the STFT and PCA transformed residual data $Z_t$, is further processed in the fourth step S44 of the fourth embodiment.

In the fourth step S44, a GAN is applied which is defined and trained on $U_r \in \mathbb{R}^{N \times r}$, symbolized by S44T, with a discriminator DISC and a generator GEN until convergence is achieved.

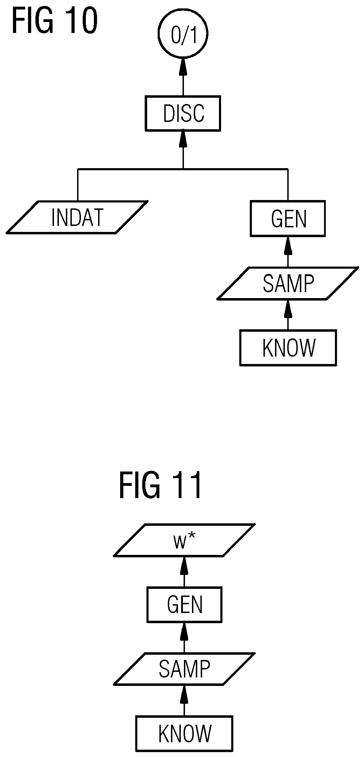

FIGs 10 and 11 show details about the GAN module. Essentially, the GAN has two modes, namely a training mode shown in FIG 10 and a generation mode shown in FIG 11.

In the training mode shown in FIG 10, the GAN model adapts its trainable parameters in order to learn the distribution of the input data INDAT. GAN generally consists of two artificial neural networks, the generator GEN and the discriminator DISC. The generator GEN takes as input random samples RAND from a simple and known distribution KNOW, such as a Gaussian or a uniform distribution, and performs transformation so that they resemble the input data. The discriminator takes as input both the real input data INDAT and the data generated by the generator GEN and attempts to classify them correctly. In order to train the discriminator DISC, it is provided with correct binary labels 0/1. In order to train the generator GEN, the discriminator's DISC parameters are frozen and only those in the generator GEN are updated with reversed labels. Thus, the generator GEN shall update the parameters in such a way that it makes the current discriminator DISC classify generated samples as real. The training can be considered to be completed when the discriminator DISC cannot distinguish between generated and real samples.

In the generation mode shown in FIG 11, the trained generator GEN transforms any simple random seed into real-like data w*.

Coming back to the fourth step S44 of the method shown in FIG 9 for generating the new sample S* from residual data $Z_t$ based on the GAN approach, GAN is trained on $U_r \in \mathbb{R}^{N \times r}$ with the discriminator DISC and the generator GEN until convergence is achieved. That includes that for an update of the discriminator DISC, an optimization is conducted by maximizing h(1,DISC($U_r$))+h(0,DISC(GEN(Z))). For an update of the generator GEN an optimization is conducted as well by maximizing h(1,DISC(GEN(Z))). Therein, $Z \sim N_G(0,I)$ and h(y,p)=y•log(p)+(1-y)•log(1-p) is applicable.

When convergence is achieved, a new vector w* is sampled from a multivariate Gaussian distribution with w*~$N_G$(0,I). With this w*, the underlying data for the new sample S* to be applied for augmenting the simulation data SD is available.

As mentioned above, the fifth step S45 principally corresponds to S25 in being an inverse PCA transformation and the sixth step S46 principally corresponds to S26 in being an inverse STFT transformation. In the step S45, an inverse PCA based on PCA parameters of step S43 is performed on GEN $(w) \star V \in \mathbb{R}^{N \times (2 \cdot L \cdot M)}$. In the sixth step S46, an inverse STFT transformation STFT$^{-1}$ based on parameters applied in the second step S32 is performed to finally generate S*=STFT$^{-1}$(f$^{-1}$(w*V)). The usage of corresponding parameters in forward and backward transformations STFT, STFT$^{-1}$ and PCA, PCA$^{-1}$, respectively, are indicated in FIG 9 by arrows between the corresponding process steps.

The GAN model enjoys the advantage of being extremely flexible in approximating theoretically any data distribution. This advantage becomes even more apparent as the number of training samples grows. The KDE, being a instance-based approach, needs to store all samples in order to generate new samples. In contrast, once the GAN is trained only the generator part GEN has to be stored, which is similar to the application scenario of VAE. Thus, as soon as the number of training samples exceeds the number of necessary trainable parameters, it is advantageous to apply the VAE or GAN approach instead of the KDE method. In comparison with VAE, GAN is even hungrier for training data and can thus profit even more.

As a summary, in each embodiment the sample preparation module 120 of the augmenter 100 receives real data XR and simulated data XS and generates residual data Z from these input data in a first step S11, S21, S31, S41 or the respective approach. The residual data Z are then further processed by the sample preparation module 120 in different ways according to the different embodiments to finally generate a new sample S* as output data of the sample preparation module 120. In each case, the new sample S* is provided to the augmentation module 110 which utilizes the new sample S* to augment simulation data SD to generate realistic data RD. The realistic data RD are meant to be used to train a data evaluation model DEM.

Thus, the very basic approach which all embodiments have in common is that in the phase of generating the respective model MOD, the distributions of the residuals Z are modeled. Once the model has been trained, new samples S* can be drawn over and over again to be added to the simulation data SD to generate RD.

The second, third, and fourth embodiment have in common that each one of those embodiments applies a Short-Time Fourier Transformation STFT on the residual data Z and, at least optionally, a Principal Component Analysis PCA on the output of the STFT step. After such pre-processing the characterizing step of the different embodiments, i. e. the KDE method, the VAE method, and the GAN method, respectively, is performed. Consequently, the inverse functions STFT$^{-1}$ and, as the case may be, PCA$^{-1}$ have to be executed subsequently and in the right order to generate a suitable new sample S*. The advantage of STFT is the fact that one takes into account the nature of the data. Industrial signal data are often long time series that can be modeled using Fourier transformation. A second advantage of STFT is its invertibility. That is to say, the generated data in frequency domain can be transformed back to time domain. The PCA is advantageous in that it is a data-driven approach to extract the most important information from the frequencies in a principled manner. One also does not have to make any assumption such as only the low or high frequencies are important. The PCA is also invertible, so that the KDE only needs to learn the distribution of the principal components of the STFT of the raw data. As mentioned earlier, the combination of STFT and PCA aims at reducing the dimensionality and extracting representations to an extent that their distances can be well captured using an RBF kernel in the KDE example. The STFT first splits the complete signal into smaller windows with, for example, 50% overlapping and transforms the temporal signal in each window into frequency domain. In our data situation, not every time window is relevant, nor is every frequency. Therefore, PCA serves as a feature selector that keeps only the most relevant ones. PCA is fitted by maximizing the variance in each orthogonal dimension and is thus purely data driven without any need to hand engineer. In a situation where training data are not abundant, reducing the input dimensionality effectively reduces the model complexity. Moreover, the role of the Gaussian distributions in KDE, VAE, and GAN is similar in that it serves as a random number generator. In KDE, it is only assumed that the processed data are already Gaussian distributed, which is not always correct so that VAE and GAN might be the more suitable approaches in such situations with VAE and GAN being capable of transforming Gaussian distributed data into the empirical distribution of the training data.

## Claims

1. A computer implemented sample preparation method for generating a new sample S* of data for augmenting simulation data SD to generate realistic data RD=SD⊕S* to be applied for training of a data evaluation model DEM, wherein

   - the new sample S* is based on an output data set ODS sampled from a model MOD,
   - the model MOD is a model of an input data set IDS which is based on residual data Z, wherein the residual data Z are based on real data XR of a real process and simulated data XS of a simulated process corresponding to the real process.

2. A method according to claim 1, wherein

   - for a generation of the model MOD, a Short-Time Fourier Transformation (STFT) is applied on the residual data Z before the model MOD of the residual data Z is generated, such that the generation of the model MOD is based on the STFT transformed residual data Z as input data set IDS,
   - for the generation of the new sample S*, a corresponding inverse Short-Time Fourier Transformation (STFT$^{-1}$) is applied on the output data set ODS sampled from the model MOD of the residual data Z to generate the new sample S*.

3. A method according to claim 2, wherein

   - for the generation of the model MOD, a Principal Component Analysis (PCA) is applied on the STFT transformed residual data Z before the model MOD of the residual data Z is generated, such that the generation of the model MOD of the residual data Z is based on the STFT and subsequently PCA transformed residual data Z as input data set IDS,
   - for the generation of the new sample S*, a corresponding inverse Principal Component Analysis (PCA$^{-1}$) is applied on the output data set ODS of the model MOD before the inverse Short-Time Fourier Transformation (STFT$^{-1}$) is applied, such that the inverse Short-Time Fourier Transformation (STFT$^{-1}$) is applied on the output of the inverse Principal Component Analysis (PCA$^{-1}$).

4. A method according to any one of claims 1 to 3, wherein the model MOD is generated based on a multivariate Gaussian method MVG.

5. A method according to claim 4, wherein

- a covariance matrix CM is calculated for the residual data Z with entries $CM_{ij}=Cov(Z_i,Z_j)$ with coefficients i and j, each ranging from 1 to T with T representing the number of elements of the residual data Z, and
- for the sampling of the output data set ODS from the so generated MVG based model MOD(MVG), a random sample RANDS is drawn from the corresponding modeled multivariate Gaussian distribution with $N_G(0,CM)$.

6. A method according to claim 5, wherein

- for the generation of the model MOD, a pre-processing step PRE, especially a downsampling method, is performed on the real data XR and on the simulated data XS before calculation of the residual data Z to reduce their amounts of data, resulting in DOWN(XR) and DOWN(XS), and
- a corresponding data upsampling step UP is performed on the random sample RANDS drawn from the multivariate Gaussian distribution to generate the new sample S*, such that S*=UP (RANDS) .

7. A method according to any one of claims 1 to 3, wherein the model MOD applies a Kernel Density Estimation method KDE, wherein for the generation of the model MOD, a distribution $U_r$ of the input data set IDS is determined based on the Kernel Density Estimation method KDE.

8. A method according to any claim 7, wherein for the generation of the output data set ODS, a vector w* is sampled from the so generated KDE based model MOD.

9. A method according to any one of claims 1 to 3, wherein the model MOD is based on a Variational Auto-Encoder VAE, wherein for the generation of the model MOD, the Variational Auto-Encoder VAE comprising an encoder ANN1 and a decoder ANN2 is trained based on the input data set IDS such that the output data set ODS can be generated by the trained Variational Auto-Encoder VAE based on a randomly selected data set, preferably sampled from a zero-mean standard-variance multivariate Gaussian distribution, provided to the Variational Auto-Encoder VAE.

10. A method according to claim 9, wherein for the generation of the output data set ODS,

- the randomly selected data set, preferably having a Gaussian distribution, is provided to the trained decoder ANN2 and
- the trained decoder ANN2 performs a transformation of the provided distribution to generate the output data set ODS.

11. A method according to any one of claims 1 to 3, wherein the model MOD is based on a Generative Adversarial Network GAN, wherein for the generation of the model MOD, the Generative Adversarial Network GAN is trained based on the input data set IDS such that the output data set ODS can be generated by the trained Generative Adversarial Network GAN based on a randomly selected data set, preferably a multivariate Gaussian distribution, provided to the Generative Adversarial Network GAN.

12. A method according to claim 11, wherein for the generation of the output data set ODS,

- the randomly selected data set is provided to the trained generator GEN and
- the trained generator GEN generates the output data set ODS based on the provided randomly selected data set.

13. A computer system (1) for generating a new sample S* of data for augmenting simulation data SD to generate realistic data RD=SD⊕S* to be applied for training of a data evaluation model DEM, comprising a sample preparation module (120) configured to perform a method according to any one of claims 1 to 12 to generate the new sample S*.

14. A computer system (1) according to claim 13, wherein the sample preparation module (120) is connected to an augmentation module (110) of the computer system (1) which is configured to augment simulated data SD with the new sample S* to generate the realistic data RD.

15. A data evaluation module (130) for anomaly detection in an industrial process, wherein the data evaluation module (130) is configured to receive data from the industrial process and to detect anomalies in the received data which anomalies represent an anomaly in the industrial process, wherein the data evaluation module (130) applies an artificial neural network DEM which is trained based on realistic data RD generated by the computer system (1) according to any one of claims 13 to 14.

# FIG 1

# FIG 2

## FIG 3

S*

S13

ODS ~ CM

120

S12

IDS ~ Z

S11

XR, XS

## FIG 4

S*

S14'

S*'

S13

CM'

S12

120

Z'

S11

XR', XS'

S10'

XR, XS

# FIG 5

$$N_G(0, CM)$$

S13

S12

S11

S*

Z

XS

XR

SD

RD

120

# FIG 6

# FIG 7

## FIG 8

```
                    ┌──────────────────────────────┐
                    │          RECDAT              │◀──────────────────┐
                    └──────────────────────────────┘                    │
                                  ▲                                      │
                                  │                                      │
                              ┌───────┐                                  │
                              │ ANN2  │                                  │
                              └───────┘                                  │
                                  ▲                                      │
                                  │                                      │
                    ┌──────────────────────┐                            │
                    │        SAM           │◀─────────────────┐         │
                    └──────────────────────┘                   │         │
                                  ▲                             │         │
                                  │                             │         │
              ┌──────────────┐        ┌─────┐      ┌──────────────┐      │
              │  N(m, s*l)   │◀───────│ KL  │─────▶│   N(0, l)    │      │
              └──────────────┘        └─────┘      └──────────────┘    ┌───┐
                     ▲  ▲                                              │MSE│
                    ╱    ╲                                             └───┘
              ┌────────┐ ┌────────┐                                      │
              │   m    │ │   s    │                                      │
              └────────┘ └────────┘                                      │
                    ▲      ▲                                             │
                     ╲    ╱                                              │
                   ┌───────┐                                            │
                   │ ANN1  │                                            │
                   └───────┘                                            │
                       ▲                                                │
                       │                                                │
              ┌──────────────────────┐                                 │
              │        INDAT         │◀────────────────────────────────┘
              └──────────────────────┘
```

# FIG 9

## FIG 10

```
        (0/1)
          ↑
       ┌──────┐
       │ DISC │
       └──────┘
          ↑
     ┌────┴────────┐
  ╱INDAT╱      ┌──────┐
               │ GEN  │
               └──────┘
                  ↑
              ╱ SAMP ╱
                  ↑
              ┌───────┐
              │ KNOW  │
              └───────┘
```

## FIG 11

```
       ╱ w* ╱
          ↑
      ┌──────┐
      │ GEN  │
      └──────┘
          ↑
      ╱ SAMP ╱
          ↑
      ┌───────┐
      │ KNOW  │
      └───────┘
```

Europäisches
Patentamt

European
Patent Office

Office européen
des brevets

**EUROPEAN SEARCH REPORT**

Application Number

EP 21 15 9225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOYUAN MA ET AL: "Data augmentation in microscopic images for material data mining", ARXIV.ORG, CORNELL UNIVERSITY LIBRARY, 201 OLIN LIBRARY CORNELL UNIVERSITY ITHACA, NY 14853, 12 May 2019 (2019-05-12), XP081510428, | 1,13,14 | INV. G06N3/04 G06N3/08 G06N20/10 |
| Y | * abstract * * figure 2 * * page 1 - page 4 * | 2-12,15 | |
| Y | YONGYI RAN ET AL: "A Survey of Predictive Maintenance: Systems, Purposes and Approaches", ARXIV.ORG, CORNELL UNIVERSITY LIBRARY, 201 OLIN LIBRARY CORNELL UNIVERSITY ITHACA, NY 14853, 12 December 2019 (2019-12-12), XP081559610, | 2,3,11, 12,15 | |
| A | * page 20 - page 24 * | 1,4-10, 13,14 | |
| | | | TECHNICAL FIELDS SEARCHED (IPC) |
| Y | SYDNEY OTTEN ET AL: "Event Generation and Statistical Sampling for Physics with Deep Generative Models and a Density Information Buffer", ARXIV.ORG, CORNELL UNIVERSITY LIBRARY, 201 OLIN LIBRARY CORNELL UNIVERSITY ITHACA, NY 14853, 3 January 2019 (2019-01-03), XP081544444, | 4-12 | G06N |
| A | * abstract * * page 3 - page 7 * | 1-3, 13-15 | |

-/--

The present search report has been drawn up for all claims

| Place of search | Date of completion of the search | Examiner |
|---|---|---|
| Munich | 27 July 2021 | Baudino, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 21 15 9225

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | OHNO HIROSHI ED - XIE L ET AL: "Auto-encoder-based generative models for data augmentation on regression problems", SOFT COMPUTING, SPRINGER VERLAG, BERLIN, DE, vol. 24, no. 11, 30 May 2019 (2019-05-30), pages 7999-8009, XP037130665, ISSN: 1432-7643, DOI: 10.1007/S00500-019-04094-0 [retrieved on 2019-05-30] | 7-12 | |
| A | * abstract * * introduction, section 5.2 * ----- | 1-6, 13-15 | |

TECHNICAL FIELDS
SEARCHED      (IPC)

The present search report has been drawn up for all claims

| Place of search | Date of completion of the search | Examiner |
|---|---|---|
| Munich | 27 July 2021 | Baudino, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)